# EUROPÄISCHE PATENTSCHRIFT

(11) **EP 0 567 960 B1**
(45) Veröffentlichungstag und Bekanntmachung des Hinweises auf die Patenterteilung: **06.03.1996**
(21) Anmeldenummer: 93106697.1
(22) Anmeldetag: 24.04.1993
(51) Int. Cl.: A01B 73/00, A01B 59/04, B62D 13/00

(54) **Anhängevorrichtung zum Ziehen eines ersten und eines zweiten Gerätes**
Hitch assembly for towing two implements
Attelage de remorque pour traîner deux appareils

(30) Priorität: 30.04.1992 US 876238
(43) Veröffentlichungstag der Anmeldung: 03.11.1993
(73) Patentinhaber: DEERE & COMPANY, Moline, Illinois 61265 (US)
(72) Erfinder: Snyder, Michael Duane, Bettendorf, Iowa 52722 (US); Long, John David, Ankeny, Iowa 51121 (US); Foley, Daniel Michael, Des Moines, Iowa 52804 (US)
(74) Vertreter: Feldmann, Bernhard

(56) Entgegenhaltungen:
- GB-A- 2 076 624
- GB-A- 2 116 131
- US-A- 4 213 628
- US-A- 4 381 118
- US-A- 4 552 374
- US-A- 4 577 881
- US-A- 4 768 334
- US-A- 4 875 527
- US-A- 4 881 603
- US-A- 5 024 456
- PATENT ABSTRACTS OF JAPAN vol. 013, no. 542 (M-901)5. Dezember 1989

## Beschreibung

Die Erfindung bezieht sich auf eine Anhängevorrichtung zum Ziehen eines ersten und eines zweiten Gerätes, die mit Laufrädern versehen sind, zwischen einer Transport- und einer Arbeitsstellung umsetzbar sind, in der Transportstellung hintereinander und in der Arbeitsstellung nebeneinander laufen.

Um die Produktivität zu erhöhen, werden die Arbeitsbreiten von in der Landwirtschaft einsetzbaren Geräten immer größer, bzw. der landwirtschaftliche Unternehmer hat bei einem Arbeitsgang eine immer größer werdende Feldbreite zu bestellen. Es werden deshalb mehrere Geräte im Arbeitseinsatz hintereinander aber seitlich zueinander versetzt gefahren (US-A-4 213 628). Dies bringt Zugprobleme für den ziehenden Schlepper mit sich und läßt bei Kurvenfahrten unbestellte Flächen entstehen. Sind derartige Geräte noch mit im Einsatz nachzufüllenden Behältern ausgerüstet, so entstehen zusätzliche Befüllungsprobleme.

Es ist deshalb bereits vorgeschlagen worden, die Arbeitsgeräte im Einsatz nebeneinander laufen zu lassen. Beim Befahren von öffentlichen Straßen sind aber derartige Arbeitsbreiten allesamt zu groß, und die Geräte müssen derart umgesetzt werden, daß sie für den Transport hintereinander laufen. Dies ist auch bei der Anhängevorrichtung, von der die Erfindung ausgeht (US-A-4 875 527), der Fall. Jedes Gerät ist dabei mit einer eigenen Zugdeichsel und einem einklappbaren Gestängeteil versehen, der für den Feldeinsatz ausgeklappt wird und mit dem Gestängeteil des anderen Gerätes zu verbinden ist. Dies hat alles manuell zu erfolgen. Federn erleichtern zwar den Schwenkvorgang, doch ist es offensichtlich, daß bei derartigen Anhängevorrichtungen ein Umsetzen von der Transport- in die Arbeitsstellung oder umgekehrt zumindest sehr zeitaufwendig ist. Um aber derartige Geräte in der Arbeitsstellung miteinander verbinden zu können, müssen sie zunächst aus ihrer Transportstellung nebeneinander gefahren werden, wobei der ziehende Schlepper an- und abgekuppelt werden muß.

Auch ist es nicht mehr neu (US-A-5 024 456), ein erstes und ein zweites mit Laufrädern versehenes Gerät, die in der Transportstellung hintereinander und in der Arbeitsstellung seitlich zueinander versetzt laufen, über eine Schwingdeichsel miteinander zu verbinden. Das zweite Gerät ist mit einer sich auf einem Pendelrad abstützenden Anhängevorrichtung versehen, und die Schwingdeichsel wird zwischen ihren Stellungen für die Transport- und Arbeitsstellung über einen doppelseitig beaufschlagbaren Hydraulikzylinder verstellt.

Das Dokument US-A-4 552 374 offenbart einen sich auf Laufrädern abstützenden und an ein ziehendes Fahrzeug anschließbaren Frontträger, an dem ein erstes Arbeitsgerät und ein Schwingrahmen angelenkt sind, der über eine mechanische Stellvorrichtung oder einen Hydraulikzylinder in eine Vielzahl seitlicher Stellungen verstellt werden kann, damit ein zweites an den Schwingrahmen angelenktes Arbeitsgerät in verschiedenen seitlich versetzten Arbeitsstellungen hinter dem ersten Arbeitsgerät fahren kann. Damit das zweite Arbeitsgerät angeblich besser geführt werden kann, ist an den Schwingrahmen ein Pendelrad angeschlossen, das in allen Arbeitsstellungen derart zwangsgeführt ist, daß es zu dem Frontträger senkrecht verläuft.

Zwischen einer Arbeits- und einer Transportstellung steuerbare Laufräder gehen aus der US-A-4 768 334 hervor.

Die der Erfindung zugrunde liegende Aufgabe wird in einer verbesserten Anhängevorrichtung gesehen, bei der die eingangs genannten Probleme zumindest teilweise gelöst sind. Die Erfindung sieht deshalb eine Schwingdeichsel vor, deren eines Ende horizontal schwenkbar an dem ersten Gerät und deren anderes Ende horizontal schwenkbar an dem zweiten Gerät angeschlossen ist und die zwischen einer ersten Stellung, die der Transportstellung entspricht, und einer zweiten Stellung, die der Arbeitsstellung entspricht, beim Einschlagen mindestens eines steuerbaren Laufrades, das an dem zweiten Gerät vorgesehen ist, und durch das sich fortbewegende erste und / oder das sich fortbewegende zweite Gerät verstellbar ist.

Auf diese Weise kann bei fahrendem ersten Gerät, was durch ein ziehendes Fahrzeug, beispielsweise einen Schlepper erfolgt, das zweite Gerät in seine jeweiligen Positionen gesteuert werden. Die Schwingdeichsel braucht nicht abgebaut zu werden und ein An- und Abkuppeln eines Schleppers ist ebenfalls nicht mehr erforderlich. Das Umsetzen kann auf kleinsten Raum erreicht werden.

Das Steuern kann in einfacher Weise dadurch erfolgen, daß das steuerbare Laufrad als Pendelrad ausgebildet ist, dessen Pendelachse über einen Motor drehbar ist. Findet ein Satz Pendelräder Verwendung, so ergibt sich eine noch bessere Lenkbarkeit.

Das Steuern des oder der Pendelräder kann von der Kabine eines ziehenden Schleppers aus erfolgen, da nach der Erfindung noch vorgesehen ist, daß der Motor fernbedienbar ist.

Nach einem weiteren Vorschlag der Erfindung ist vorgesehen, daß die Pendelachse des steuerbaren Laufrades über den Motor wahlweise drehbar ist. Damit ist die Möglichkeit eingeräumt, daß das Pendelrad auch frei drehen kann, was von Vorteil ist, wenn sich das zweite Gerät in seiner Transport- oder Arbeitsstellung befindet. Zum wahlweisen Steuern dient ein einfacher elektrischer auf ein Magnetventil einwirkender Steuerkreis mit einem zweipoligen Einfachschalter. Je nachdem, wie der Steuerkreis geschlossen wird, kann das Pendelrad nach rechts oder links einschlagen. Ist der Steuerkreis offen, kann das Pendelrad frei drehen. Der Einfachschalter befindet sich zweckmäßig in der Schlepperkabine. Der Motor ist als Hydraulikmotor ausgebildet, dessen Drehrichtung umkehrbar ist, der wahlweise an eine Druckquelle anschließbar ist und der mit der Pendelachse des steuerbaren Laufrades über ein Getriebe verbunden ist.

Da das Pendelrad in der Arbeits- und Transportstellung frei drehbar sein kann, sind nach der Erfindung weitere Vorkehrungen getroffen, damit die Schwingdeichsel in ihren jeweiligen Endstellungen festgesetzt werden kann, weshalb erfindungsgemäß vorgeschlagen wird, daß die Schwingdeichsel in der Transportstellung mit einer am ersten Gerät vorgesehenen Lasche und in der Arbeitsstellung mit einer am ersten Gerät vorgesehenen Zugdeichsel verriegelbar ist.

Da die Schwingdeichsel das zweite Gerät sowohl in der Arbeitsstellung als auch in der Transportstellung führt und dauerhaft am ersten Gerät angeschlossen ist, wird ferner vorgeschlagen, daß die Schwingdeichsel im Bereich einer Außenseite des ersten Gerätes schwenkbar angeschlossen und bogenförmig oder winklig ausgebildet ist.

Damit in der Transportstellung und auch in der Arbeitsstellung ein leichter Zug der Gerätekombination möglich ist, sieht die Erfindung außerdem vor, daß die Zugdeichsel, die das erste Gerät an einen ziehenden Schlepper anschließt, am ersten Gerät zwischen einer Transportstellung und einer Arbeitsstellung horizontal schwenkbar angeschlossen und in der Transport- und in der Arbeitsstellung mit einem am ersten Gerät vorgesehenen Stellglied verriegelbar ist.

Damit der Schlepperfahrer beim Umsetzen des zweiten Gerätes nur einmal die Schlepperkabine verlassen muß, sind die Schwing- und die Zugdeichsel erfindungsgemäß mit je einer Verriegelung versehen, die manuell entriegelbar und automatisch verriegelbar sind. Zum Entriegeln verläßt damit der Fahrer den Schlepper, und ein Verriegeln in der Arbeits- und Transportstellung von Zug- und Schwingdeichsel erfolgt automatisch.

Im einzelnen kann die Schwingdeichsel einen stangenförmigen Teil aufweisen, der über einen Ausleger mit dem ersten Gerät derart horizontal schwenkbar verbunden ist, daß der stangenförmige Teil sich in der Transportstellung parallel oder etwa parallel zur Fahrtrichtung entlang einer Geräteseite erstreckt und aus der Transportstellung um etwa 180° nach vorne in die Arbeitsstellung verschwenkbar ist, wobei sich an den stangenförmigen Teil in einem Winkel von größer als 90° ein Schenkelteil anschließt, der mit einer Anhängestange am zweiten Gerät verbindbar ist. Infolge einer derartigen Ausbildung erstreckt sich der stangenförmige Teil in der Arbeitsstellung nach vorne und kann in der Transportstellung oberhalb des ersten Gerätes liegen. In jedem Fall wird weder in der Transport- noch in der Arbeitsstellung die Gerätebreite vergrößert, und in der Arbeitsstellung befinden sich beide Geräte dicht nebeneinander, ohne daß sie von Teilen der Schwingdeichsel behindert würden.

Es ist außerdem vorteilhaft, wenn die Verriegelung der Schwingdeichsel im Bereich der Verbindung des stangenförmigen Teils mit dem Schenkelteil vorgesehen ist und daß die Anlenkstellen der Zug- und der Schwingdeichsel zueinander Abstand aufweisen und zwischen der Längsmittellinie des ersten Gerätes und einer Seitenkante des ersten Gerätes liegen.

Das zweite Gerät kann Bodenunebenheiten folgen bzw. gegenüber dem ersten Gerät vertikale Relativbewegungen ausführen, wenn nach der Erfindung ferner der Schenkelteil mit dem stangenförmigen Teil vertikal schwenkbar verbunden ist.

Das Entriegeln wird in der Arbeitsstellung noch weiter vereinfacht dadurch, daß die Verriegelungen mit je einem Entriegelungsgriff versehen sind, wobei der Entriegelungsgriff an der Schwingdeichsel sich in deren Arbeitsstellung an der dem Entriegelungsgriff an der Zugdeichsel gegenüberliegenden Seite der Zugdeichsel befindet. Eine Bedienungsperson braucht damit zum Entriegeln nur beide Griffe umzulegen, was gleichzeitig und sehr schnell erfolgen kann.

In der Zeichnung ist ein nachfolgend näher erläutertes Ausführungsbeispiel der Erfindung dargestellt. Es zeigt:
- Fig. 1: eine Anhängevorrichtung für zwei Geräte in der Transportstellung und in der Draufsicht;
- Fig. 2: eine ähnliche Darstellung wie in Fig. 1, wobei sich das zweite Gerät in einer Zwischenstellung zwischen seiner Transport- und Arbeitsstellung befindet;
- Fig. 3: eine ähnliche Darstellung wie in den Fig. 1 und 2, jedoch die Anhängevorrichtung in ihrer Arbeitsstellung für das Feld zeigend, in der die beiden Geräte in derselben Querebene nebeneinander angeordnet sind;
- Fig. 4: eine steuerbare Pendelradanordnung für das zweite Gerät in vergrößerter Darstellung;
- Fig. 5: einen Steuerkreis für die steuerbare Pendelradanordnung nach Fig. 4;
- Fig. 6: eine Verriegelung für die Zugdeichsel des ersten oder vorderen Gerätes in der Transportstellung und in perspektivischer Ansicht;
- Fig. 7: die Verriegelung nach Fig. 6 in der Draufsicht;
- Fig. 8: die Verriegelung nach Fig. 7 in der Arbeitsstellung;
- Fig. 9: eine Verriegelung für die Schwingdeichsel in perspektivischer Ansicht;
- Fig. 10: die Verriegelung nach Fig. 9 in der Draufsicht, wobei jedoch der besseren Darstellung wegen einige Teile nicht eingezeichnet sind und
- Fig. 11: die Verriegelung nach Fig. 10 in Seitenansicht.

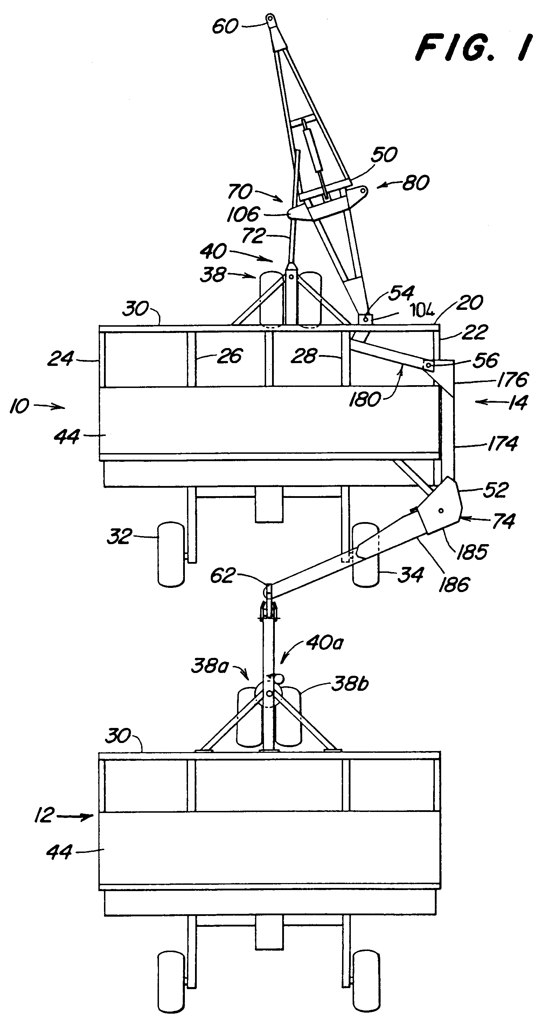

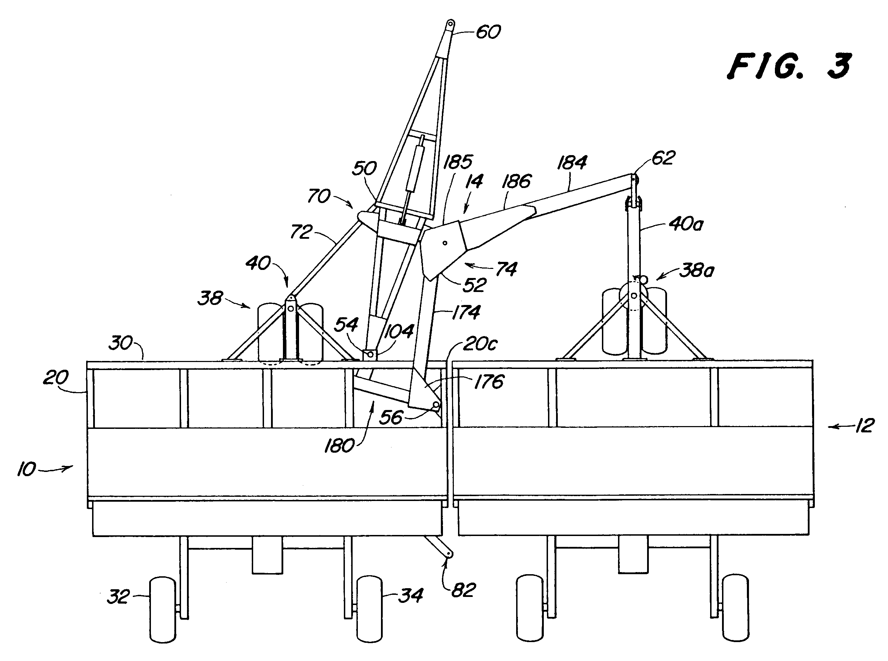

In den Fig. 1 bis 3 sind zwei vornehmlich in der Landwirtschaft einsetzbare Arbeitsgeräte mit 10 und 12 bezeichnet, die im Arbeitseinsatz bzw. auf dem Feld nebeneinander und für den Transport auf öffentlichen Straßen oder von einem Einsatzort zu einem anderen hintereinander laufen. Beide Arbeitsgeräte 10, 12 sind miteinander und mit einem sie ziehenden in der Zeichnung nicht dargestellten Schlepper über eine einzige Anhängevorrichtung 14 verbunden. Fig 1 zeigt die Transportstellung, in der die Anhängevorrichtung das rückwärtige Gerät 12 in derselben Spur wie das vordere Gerät 10 führt. Fig. 3 zeigt die Arbeitsstellung auf dem Feld.

Die Arbeitsgeräte laufen auf eigenen Rädern und können als Sämaschinen, wie sie in dem Dokument US-A-4 875 421 offenbart sind, ausgebildet sein. Andere Gerätetypen können natürlich auch durch die einzige Anhängevorrichtung 14 miteinander verbunden und an ein ziehendes Fahrzeug angeschlossen sein. Die in den Fig. 1 bis 3 angedeuteten Arbeitsgeräte oder nur das vordere Gerät 10 weisen in der Regel einen rechteckig geformten Hauptrahmen 20 mit Seitenrahmenteilen 22 und 24 und mittigen sich ebenfalls in Fahrtrichtung erstreckenden Rahmenteilen 26 und 28 auf, die an ihrer Frontseite durch einen quer verlaufenden Rahmenteil 30 miteinander verbunden sind. An die rückwärtigen Enden der mittigen Rahmenteile 26 und 28 können nicht einschlagbare Laufräder 32 und 34 angeschlossen sein, während sich die Frontseiten der Arbeitsgeräte 10 und 12 auf jeweils einem Satz Laufräder in Form von Pendelrädern 38 bzw. 38a abstützen. Der am vorderen Gerät 10 vorgesehene Satz Pendelräder 38 schlägt bei Kurvenfahrten entsprechend ein und ist vor dem Gerät an einer starren Anhängestange 40 angeschlossen. Das Gerät 10 bzw. 12 kann mit Behältern 44 für die Aufnahme von Saatgut und / oder Dünger versehen werden. Ist das rückwärtige Gerät nicht identisch gestaltet, so ist zumindest sein Rahmen ähnlich ausgebildet.

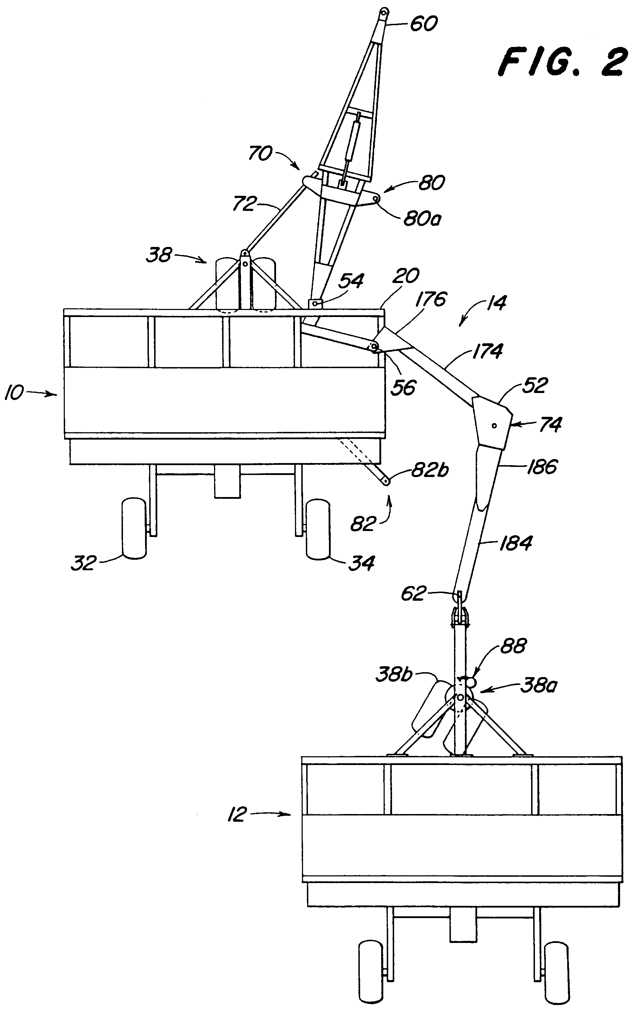

Die Anhängevorrichtung 14 besteht, wie ebenfalls leicht aus den Fig. 1 bis 3 erkennbar ist, aus einer vorderen an den Schlepper anschließbaren Zugdeichsel 50 und aus einer rückwärtigen Schwingdeichsel 52, die beide an dem Hauptrahmen 20 des vorderen oder linken Gerätes 10 zwischen einer Transportstellung gemäß Fig. 1 und einer Arbeitsstellung gemäß Fig. 3 horizontal schwenkbar anschließbar sind. Im einzelnen ist die Zugdeichsel an einem vertikal gerichteten Zapfen 54, der sich vor dem quer verlaufenden Rahmenteil 30 nahe der rechten vorderen Ecke 20c des Hauptrahmens 20 befindet, und die Schwingdeichsel 52 an einem ebenfalls vertikal gerichteten Zapfen 56 angelenkt, der noch weiter nach rechts gerückt ist und sich rückwärtig hinter dem Zapfen 54 befindet. Die Zugdeichsel 50 ist noch mit einem vorderen vertikal einstellbaren Abschnitt mit einem vorderen Anschluß 60 für die Verbindung mit einem Schlepper ausgestattet, während das rückwärtige Ende der Schwingdeichsel 52 einen Anschluß 62 aufweist, der mit einer starren Anhängestange 40a am rückwärtigen oder rechten Gerät 12 verbindbar ist. Beide Arbeitsgeräte 10 und 12 sind in in ihrer Transport- und in ihrer Arbeitsstellung verriegelbar, wozu eine an der Zugdeichsel 50 vorgesehene Verriegelung 70, die ein Stellglied 72 verschiebbar aufnimmt und die das vordere oder linke Gerät 10 in seiner Arbeits- und Transportstellung feststellt, und eine rückwärtig an der Schwingdeichsel 52 vorgesehene Verriegelung 74 dient, die an einem Kniestück der Schwingdeichsel 52 vorgesehen ist und das rückwärtige oder rechte Arbeitsgerät 12 in seiner Arbeitsstellung mit einem Gegenteil 80 an der Zugdeichsel 50 und das rückwärtige oder rechte Gerät 12 in seiner Tranportstellung mit einem Gegenteil 82 am rückwärtigen Ende des Hauptrahmens des vorderen oder linken Gerätes 10 verriegelt. Die beiden Gegenteile 80 und 82 sind in Fig. 2 erkennbar, die eine Zwischenstellung der beiden Geräte andeutet, wenn sie zwischen ihren Transport- und Arbeitsstellungen gemäß Fig. 1 und 3 verstellt werden.

Die Verriegelungen 70 und 74, die nachfolgend noch näher erläutert werden, können Stellungen einnehmen, in denen sie die Zugdeichsel 50 und die Schwingdeichsel 52 aus ihren festgestellten Stellungen entriegeln, wobei sie automatisch sperren, wenn die andere Stellung eingenommen wird, so daß die Bedienungsperson des Schleppers beim Umsetzen von einer Stellung in die andere nur einmal vom Schlepper herabsteigen muß.

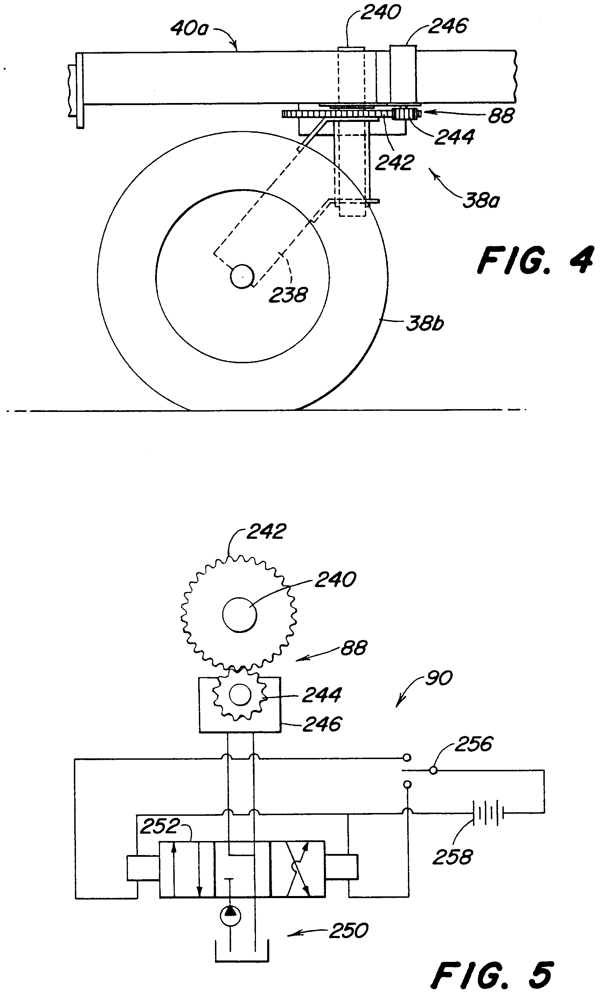

Der rückwärtige Satz Pendelräder 38a ist beim Umsetzen zwischen der Transport- und Arbeitsstellung positiv steuerbar vermittels einer wahlweise einschaltbaren Antriebsvorrichtung 88, die in Fig. 2 angedeutet und in den Fig. 4 und 5 im einzelnen dargestellt ist. Die Steuerung der Pendelräder 38a erfolgt bei der Umsetzung von der Schlepperkabine aus über einen in Fig. 5 gezeigten Steuerkreis 90, auf den ebenfalls nachfolgend noch näher eingegangen wird. Sobald das rückwärtige Gerät 12 in seine neben dem Gerät 10 liegende Arbeitsstellung nach Fig. 3 gesteuert wurde, können die Pendelräder 38a wieder frei um ihre nach oben gerichtete Pendelachse drehen, damit Kurvenfahrten leicht möglich sind.

Das rückwärtige Ende der Zugdeichsel 50 ist über den Zapfen 54 an einem Bügel 104 angeschlosssen, der an der Vorderseite des Hauptrahmens 20 vorgesehen ist. Diese Anordnung erlaubt ein horizontales Verschwenken der Zugdeichsel 50 um den Zapfen 54, wobei jedoch die Zugdeichsel 50 immer Abstand zum Erdboden aufweist. Wie aus den Fig. 1 bis 3 ersichtlich ist, ist der Zapfen 54 an einer Stelle vorgesehen, die sich mittig oder etwa mittig zwischen der Mitte des Hauptrahmens 20 und dem rechten Seitenrahmenteil 22 befindet. Die Verriegelung 70 ist an einem Ausleger 106 angeordnet, der, wie aus Fig. 1 ersichtlich ist, sich etwa in der Mitte der Zugdeichsel 50 seitlich nach links erstreckt und das Stellglied 72 führt, wenn dieses sich zwischen seiner Transport- und Arbeitsstellung bzw. umgekehrt verstellt.

Das Stellglied 72 ist an der Anhängestange 40, die herkömmlicher Bauart ist, aber, wie aus Fig. 1 erkennbar ist, aus der Mitte etwas nach rechts versetzt ist, horizontal schwenkbar angeschlossen. Infolge des seitlichen Versatzes der Anhängestange 40 ist auch der an ihr aufgehängte Satz Pendelräder 38 nach rechts seitlich von der Längsmittellinie 39 des Gerätes 10 in Richtung auf den Zapfen 54 versetzt, um damit eine bessere Lastverteilung auf die Räder zu erhalten.

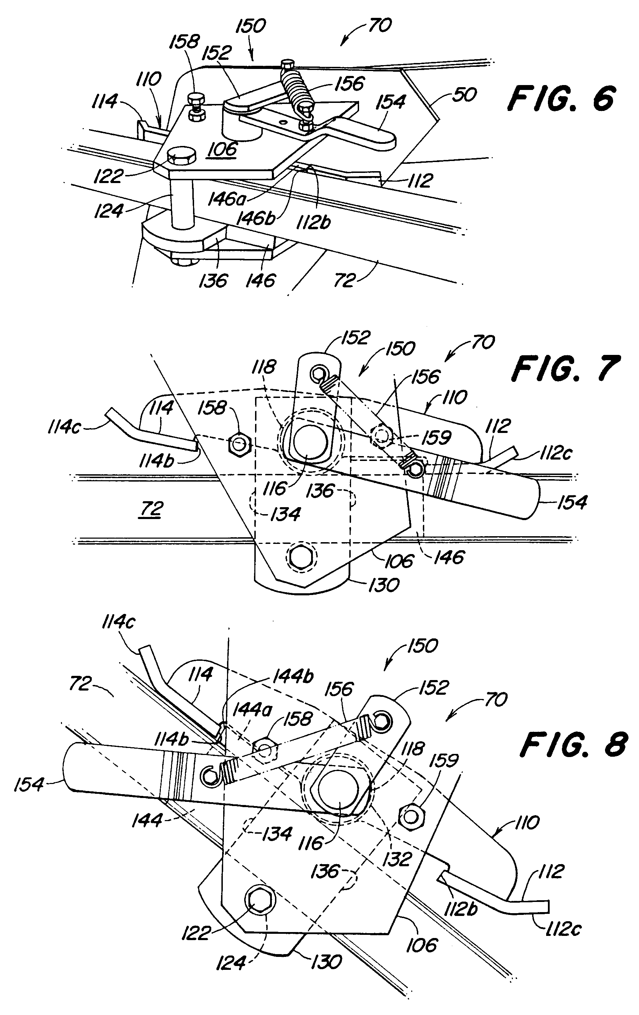

Die Verriegelung 70 ist im einzelnen in den Fig. 6 bis 8 zu erkennen. Sie weist ein verschwenkbares Sperrglied 110 mit einem Ende 112 zum Sperren in der Transportstellung und mit einem Ende 114 zum Sperren in der Feld- oder Arbeitsstellung auf, die an den sich gegenüberliegenden Seiten eines mittigen und hochstehenden Schwenkzapfens 116 vorgesehen sind. Der Schwenkzapfen 110 und eine ihn umgebende Buchse 118 sind in dem Ausleger 106 an einer Seite des verschiebbaren Stellgliedes 72 gelagert. An der dem Schwenkzapfen 116 gegenüberliegenden Seite des Stellgliedes 72 befindet sich ein Stift 122 mit einer Buchse 124, der ebenfalls in dem Ausleger 106 angeordnet ist, so daß das Stellglied 72 zwischen Schwenkzapfen 116 und Stift 122 geführt ist. Der Ausleger 106 ist vorzugsweise bügelförmig ausgestaltet und nimmt noch eine verstellbare Stoppstange 130 auf, die mit dem unteren Teil des Stiftes 122 verbunden ist, sich unterhalb des vorzugsweise im Querschnitt rechteckigen Stellgliedes 72 erstreckt und ein Ende mit einer größeren Ausnehmung 132 aufweist, die den Schwenkzapfen 116 aufnimmt. Die Stoppstange 130 ist noch mit einer vorderen Seite 134 und mit einer rückwärtigen Seite 136 ausgerüstet, die zu der Oberseite des Stellgliedes rechtwinklig verlaufen, auch dann, wenn sich das Stellglied 72 beim Verschwenken der Zugdeichsel 50 innerhalb des Auslegers 106 verstellt.

Winkeleisen 144 und 146 sind noch an der Unterseite und der dem Sperrglied 110 zugelegenen Seite des Stellgliedes 72 befestigt. Der untere Schenkel des Winkeleisens 144 dient, wie es in Fig. 8 eingezeichnet ist, zur Errichtung einer Stoppstellung, um zu verhindern, daß sich das Stellglied 72 nach rückwärts aus den Ausleger 106 schiebt, wenn sich die Zugdeichsel 50 nach links in ihre Transportstellung (Fig. 1) verstellt. Der untere Schenkel des Winkeleisens 146 kann gegen die Seite 136 der Stoppstange 130 zur Anlage kommen, wodurch eine zweite Stoppstellung erzielt und verhindert wird, daß das Stellglied 72 sich nach vorne über seine Feldstellung hinaus verstellt.

Der nach oben gerichtete Schenkel 144a des Winkeleisens 144 hat eine nach vorne gerichtete Stirnkante 144b mit einer Neigung von etwa 5° nach links in der Richtung nach oben mit Bezug auf die Fig. 7 und 8. Eine entsprechende Stirnkante 114b an dem Ende 114 des Sperrgliedes 110 sichert das Stellglied 72 positiv in seiner Arbeitsstellung für das Feld, weil sie ein Schieben nach vorne (Fig. 8) in dem Ausleger 106 verhindert. Entsprechend ausgebildete Stirnkanten 112b und 146b an dem Ende 112 des Sperrgliedes 110 und an dem hochstehenden Schenkel 146a des Winkeleisens 146 sichern das Stellglied 72 gegen ein Schieben nach vorne in dem Ausleger 106 in seiner Transportstellung nach den Fig. 6 und 7. Die winkeligen Stirnflächen verhindern ein unbeabsichtigtes Lösen der Verriegelung 70 unter großen Belastungen.

Das Sperrglied 110 der Verriegelung 70 ist in seinen beiden Endstellungen vorgespannt. Hierzu dient eine Handsperre 150, zu der ein mit dem Schwenkzapfen 116 verbundener und sich von diesem aus gesehen radial nach außen erstreckender Arm 152 gehört. Der Arm 152 ist damit zusammen mit dem Sperrglied 110 verstellbar. Desweiteren gehört zu der Handsperre 150 ein Handgriff 154, der auf dem Ausleger 106 schwenkbar aufsitzt und zwischen einer Sperrstellung in der Transportstellung (Fig. 7) und einer Sperrstellung in der Feldstellung (Fig. 8) horizontal verschwenkbar ist. Etwa mittig an dem Handgriff 154 greift eine Feder 156 an, die anderenends an das freie Ende des Armes 152 derart angeschlossen ist, daß die Feder 156 in den Endstellungen des Handgriffes immer gespannt ist. Die Feder 156 wird bei dem Verstellen des Handgriffes 154 über ihren Totpunkt geführt und nimmt dabei den Arm 152 und damit auch das Sperrglied 110 entsprechend mit. Je nach der Stellung des Handgriffes will die Feder das Sperrglied entweder im Uhrzeigerdrehsinn oder entgegen dem Uhrzeigerdrehsinn verstellen. Anschläge 158, 159 verhindern, daß der Handgriff 154 über seine Sperrstellungen hinaus verstellt werden kann. Rampenflächen 112c und 114c an den Enden 112 und 114 des Sperrgliedes 110 erlauben den hochstehenden Schenkeln 144a oder 146a der Winkeleisen die entsprechenden Enden des Sperrgliedes 110 gegen die Wirkung der Feder in die entsprechende Sperrstellung zu drücken.

In der in den Fig. 1, 6 und 7 gezeigten Transportstellung drückt die Feder 156 das Ende 112 gegen das Stellglied 27, um zu verhindern, daß sich das Stellglied in dem Ausleger 106 nach rückwärts verschiebt, wobei die Zugdeichsel 50 in der gegen den Uhrzeigerdrehsinn verstellten Stellung nach Fig. 1 gehalten wird. Die Seite 136 der verstellbaren Stoppstange 130 liegt gegen das Winkeleisen 146 an und hindert die Zugdeichsel 50 an einem Schwenken in eine Stellung entgegengesetzt dem Uhrzeigerdrehsinn nach Fig. 1, wenn der Schlepper abbremst oder in der Transportstellung eine Linkskurve durchfährt.

In der Arbeitsstellung auf dem Feld, wie sie in den Fig. 3 und 8 gezeigt ist, drückt die Feder 156 das Ende 114 gegen das Stellglied 72, um das Stellglied gegen ein Schieben nach vorne in dem Ausleger 106 aus einer Stellung zu sichern, in der die Stirnflächen 114b und 144b sich in ihrer gegenseitigen Sperrstellung befinden. Das Stellglied hält dabei die Zugdeichsel 50 in ihrer am weitesten im Uhrzeigerdrehsinn verstellten Stellung nach Fig. 3. Die Seite 134 der verstellbaren Stoppstange 130 liegt gegen das Winkeleisen 144 an, um die Zugdeichsel 50 daran zu hindern, weiter im Uhrzeigerdrehsinn über ihre in Fig. 3 gezeigte Stellung hinaus zu schwenken, beispielsweise bei einer Umsetzung aus der Transportstellung. Sobald der Handgriff 154 zum Entsperren der Verriegelung 70 bewegt wird (d. h. entgegen dem Uhrzeigerdrehsinn in Fig. 7 und im Uhrzeigerdrehsinn nach Fig. 8) wird das Ende 114 oder 112, das gegen die hochstehenden Schenkel 144a oder 146a anliegt, über die Feder 156 von dem Stellglied fortbewegt und das andere Ende wird gegen das Stellglied 72 geschwenkt, um den an der anderen Seite liegenden Schenkel des Winkeleisens aufzufangen, wenn das Stellglied 72 sich bei der Umsetzung in dem Ausleger 106 verschiebt. Daher muß der Handgriff 154 bei jeder Umsetzung nur einmal umgelegt werden.

Die Schwingdeichsel 52 ist, wie insbesondere aus den Fig. 1 bis 3 erkennbar ist, mit einer vorderen Stange 174 ausgerüstet, die an einem Ende einen Ausleger 176 aufweist, der über den Zapfen 56 mit dem Hauptrahmen 20 des vorderen oder linken Gerätes 10 horizontal schwenkbar verbunden ist. Infolge des Auslegers 176 ist die Längsachse der Stange 174 seitlich gegenüber dem Zapfen 56 versetzt, so daß sich die Stange 176 in der Transportstellung (Fig. 1) seitlich außen von dem Zapfen 56 befindet. Bei einem nach vorne Drehen der Schwingdeichsel 52 um den Zapfen 56 in die Arbeitsstellung für das Feld gemäß Fig. 3, wird die Stange 174 infolge des Auslegers 176 mit Bezug auf den Seitenrahmenteil 22 nach innen verschwenken, damit das rechte Gerät 12 in der Arbeitsstellung möglichst nah neben dem linken Gerät 10 zu liegen kommt, ohne daß eine Behinderung durch die Anhängevorrichtung 14 erfolgt. Eine Verstrebung 180 ist noch zwischen den Auslegern 104 und 176 vorgesehen, damit die Zapfen 54 und 56 sich bei großen Belastungen nicht verbiegen. Außerdem erfolgt dadurch eine bessere Lastenverteilung im Hauptrahmen 20 des linken Gerätes 10. Infolge der Ausleger 104 und 176 wird auch der rückwärtige Teil der Zugdeichsel 50 und die Stange 174 in den jeweiligen horizontalen Stellungen gehalten.

Nahe der Verriegelung 74 ist ein rückwärtiger Schenkelteil 184 an die Stange 174 über einen feststehenden Befestigungsarm 185 und eine Befestigungslasche 186 derart angeschlossen, daß eine Schwenkbewegung um eine horizontale Achse, die senkrecht zu dem Schenkelteil verläuft, möglich ist. Der Schenkelteil 184 erstreckt sich bis zu dem Anschlußende 62 und wird oberhalb des Bodens durch die Anschlußstange 40a getragen. Der Befestigungsarm 185 und die Befestigungslasche 186 verbinden die Stange 174 mit dem Schenkelteil 184 in einem Winkel von größer als 90°, um die gewünschten Relativstellungen der beiden Geräte zu erreichen und erlauben ein vertikales Ausweichen des rückwärtigen oder rechten Gerätes gegenüber dem vorderen oder linken Gerät, wenn das rechte oder rückwärtige Gerät 12 auf Bodenunebenheiten auftrifft.

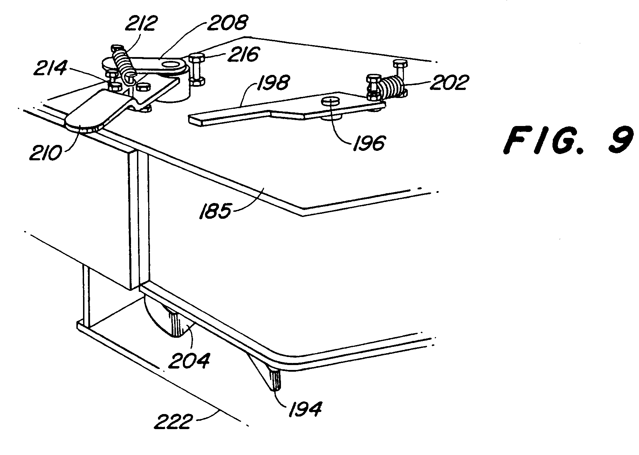

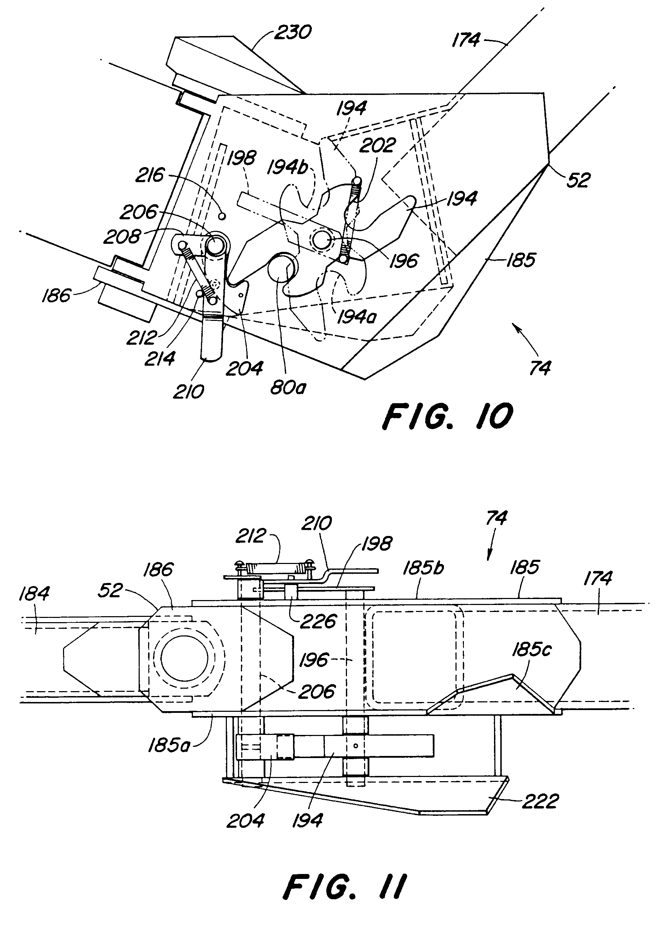

Zu der Verriegelung 74 gehört eine um ihre Achse drehbare Riegelplatte 194 mit an ihren beiden Enden vorgesehenen Verriegelungsstücken. Im einzelnen ist die Riegelplatte 194, wie es aus den Fig. 10 und 11 erkennbar ist, unterhalb einer unteren Platte 185a des Befestigungsarms 185 mit dem unteren Ende eines hochstehenden Schwenkzapfens 196 fest verbunden, der sich durch den Befestigungsarm nach oben erstreckt und an seinem oberen Ende mit einem Hebel 198 versehen ist. An dem Hebel 198 greift eine Feder 202 an, die anderenends mit der oberen Platte 185b des Befestigungsarmes 185 über einen Stift angeschlossen ist und die Riegelplatte 194 aus ihrer in Fig. 10 in ausgezogenen Linien dargestellten Riegelstellung entgegen dem Uhrzeigerdrehsinn in eine entriegelte Stellung ziehen will, die in Fig. 10 in gestrichelten Linien angedeutet ist. Ein Haken 204, der die Riegelplatte 194 in ihrer Riegelstellung festhalten kann, ist mit dem unteren Ende eines hochstehenden Schwenkzapfens 206 fest verbunden, der sich ebenfalls durch den Befestigungsarm 185 nach oben erstreckt und an seinem oberen über der Platte 185b liegenden Ende mit einem Arm 208 versehen ist. Auf das obere Ende des Schwenkzapfens 206 ist noch ein Lösegriff 210 drehbar aufgesetzt, und eine Feder 212 ist zwischen das äußere Ende des Arms 208 und einem zentralen Abschnitt des Lösegriffs 210 gespannt. Der Lösegriff 210 hat eine Sperrstellung im Uhrzeigerdrehsinn (Fig. 10), in der die Feder 212 bestrebt ist, den Arm 208 und damit auch den Haken 204 entgegen dem Uhrzeigerdrehsinn derart zu drehen, daß der Haken 204 mit der Riegelplatte 194 verrastet, um die Riegelplatte in ihrer in Fig. 10 in ausgezogenen Linien dargestellten Riegelstellung zu halten. Ein Anschlag 214 hindert den Lösegriff 210 daran, im Uhrzeigerdrehsinn über die in den Fig. 9 und 10 gezeigte Stellung hinaus zu schwenken. Zum Entriegeln wird der Lösegriff 210 entgegen dem Uhrzeigerdrehsinn verschwenkt bis er in seiner Entriegelstellung gegen einen weiteren Anschlag 216 zur Anlage kommt. Bei dieser Bewegung wird die Feder 212 über ihren Totpunkt gezogen und ist bestrebt, in der Entriegelstellung des Lösegriffs 210 den Arm 208 und Haken 204 im Uhrzeigerdrehsinn zu verschwenken, wobei der Haken 204 von der Riegelplatte 194 fortschwenkt. Danach kann die Riegelplatte 194 sich in ihre in Fig. 10 in gestrichelten Linien gezeigte Stellung verstellen.

Die untere Platte 185a des Befestigungsarms 185 ist, wie aus Fig. 11 zu erkennen ist, an der Stelle 185c nach außen erweitert. Eine entsprechende Erweiterung ist an einer Platte 222 unterhalb der Riegelplatte 194 vorgesehen, um den Eintritt des Gegenteils 80 an der Zugdeichsel 50 und ein Verriegeln mit der Riegelplatte 194 zu erleichtern. Der Gegenteil 80 ist mit einem in den Fig. 2 und 10 erkennbaren Sperrstift 80a versehen, der in eine Hakenausnehmung 194a an der Riegelplatte 194 bei der Bewegung der Schwingdeichsel 52 in ihre Arbeitsstellung für das Feld gemäß Fig. 3 eintritt. Bei einem solchen Eintritt bewirkt ein weiteres Verschwenken der Schwingdeichsel 52 in die endgültige Arbeitsstellung, daß die Riegelplatte 194 aus ihrer in Fig. 10 in gestrichelten Linien eingezeichneten Stellung in die in ausgezogenen Linien dargestellte Position verstellt wird, in der der Haken 204 die Riegelplatte 194 erfaßt und die Schwingdeichsel 52 gegen ein weiteres Drehen mit Bezug auf den Sperrstift 80a festsetzt. Aus Fig. 3 ist ersichtlich, daß die beiden Verriegelungen 70 und 74 in der Arbeitsstellung beiderseits der Zugdeichsel 50 dicht nebeneinander liegen.

Um die Schwingdeichsel 52 aus ihrer in Fig. 3 gezeigten Arbeitsstellung für das Feld zu lösen, wird der Lösegriff 210 mit Bezug auf Fig. 10 entgegen dem Uhrzeigerdrehsinn soweit verschwenkt, bis er gegen den Anschlag 216 zur Anlage kommt, wobei der Haken 204 von der Riegelplatte 194 über die Feder 212 fortgeschwenkt wird. Sobald der Haken 204 frei ist, kann die Riegelplatte 194 in ihre in Fig. 10 in gestrichelten Linien eingezeichnete Stellung verschwenken, wenn die Schwingdeichsel 52 von dem Sperrstift 80a fortschwenkt. An dem Lösegriff 210 ist noch ein Kontakt 226 in Form eines Stiftes vorgesehen, gegen den der Hebel 198 schlägt, wenn die Riegelplatte 194 in ihre Lösestellung gedreht wird. Der Hebel 198 stellt dabei den Lösegriff 210 in seine Sperrstellung zurück, wobei die Feder 212 wieder über ihren Totpunkt verschwenkt wird und die Verriegelung 74 eine Stellung einnimmt, in der sie die Schwingdeichsel 52 in einer neuen Position automatisch wieder verriegeln kann. Wenn die Schwingdeichsel 52 in ihre Transportstellung nach Fig.1 zurückschwenkt, wird ein Sperrstift 82b an der rückwärtigen Lasche 82 in die gegenüberliegende Fangausnehmung 194b an der Riegelplatte 194 durch einen geflanschten Laschenbereich 230 geführt. Die Lasche 82 zwingt die Riegelplatte 194 in eine Richtung im Uhrzeigerdrehsinn in eine in Fig. 10 in ausgezogenen Linien dargestellte Stellung. Die Platte 194 nimmt dem Haken 204 gegen die Spannung der Feder 212 mit, bis der Haken die Platte verriegelt, wie es in Fig. 10 gezeigt ist. Bei verriegelter Platte 194, ist der Sperrstift 82b in der Fangausnehmung 194b gefangen, um die Anhängevorrichtung in der Transportstellung zu arretieren. Um das Gerät wieder in seine Arbeitsstellung für das Feld umzusetzen, wird der Lösegriff 210 wieder entgegen dem Uhrzeigerdrehsinn bis zur Anlage gegen den Anschlag 216 verstellt, wobei die Federspannung den Haken 204 von der Riegelplatte 194 fortschwenkt und die Riegelplatte sich in ihre entriegelte Stellung verstellen kann, wenn die Schwingdeichsel 52 beginnt, sich nach vorne um den Zapfen 56 zu drehen. Zur gleichen Zeit verstellt der Hebel 198 den Lösegriff 210 automatisch in seine Riegelstellung zurück, und die Verriegelung 74 nimmt wieder eine Stellung ein, in der sie sich automatisch mit dem Gegenteil 80 verriegeln kann, wenn die Arbeitsstellung für das Feld erreicht ist. Daher ist es bei jeder Umsetzung nur einmal erforderlich, daß der Schlepperfahrer die Kabine verläßt, um den Handgriff 154 der Verriegelung 70 und den Lösegriff der Verriegelung 74 entsprechend zu verstellen.

Der steuerbare Satz Pendelräder 38a (siehe die Fig. 4 und 5) besteht aus einem Paar Laufräder 38b, die an einem Radträger 238 angeordnet sind. Der Radträger erstreckt sich von den Laufrädern aus gesehen nach oben und vorne zu einer Schwenkverbindung mit einer aufwärts gerichteten Schwenkwelle 240, die mit der Anhängestange 40a verschweißt ist. Ein großes Zahnrad 242 ist mit dem Radträger 238 fest verbunden und steht mit einem kleineren Antriebsritzel 244 mit kleiner Drehzahl an einem hydraulischen Motor 246 in Eingriff. Der Motor 246 ist an einer Quelle von hydraulischer Druckflüssigkeit 250 am Schlepper über ein Dreiwege- Vierstellungsventil 252 angeschlossen, das elektromagnetisch betätigbar ist. Das Ventil 252, das normalerweise seine Mittelstellung einnimmt, ist in dem Steuerkreis 90 vorgesehen, der einen zweipoligen Einfachschalter 256 aufweist, der in der Schlepperkabine angeordnet ist. Der Schalter 256 ist in Richtung auf seine Offenstellung federbelastet und zwischen einer Batterie 258 am Schlepper und den Solenoiden des Ventils 252 vorgesehen. In der Offenstellung des Schalters 256, die in Fig. 5 dargestellt ist, befindet sich das Ventil 252 in seiner mittigen Position, in der der hydraulische Motor 246 nicht mit Druckflüssigkeit versorgt wird und mit einem Sammelbehälter verbunden ist. In dieser Stellung des Ventils 252 können die Laufräder 38b frei um die Achse der Schwenkwelle 240 pendeln. Die Bedienungsperson kann die Laufräder 38b positiv in eine Richtung bei der Umsetzung steuern, indem sie den Schalter 256 nach oben verstellt, wodurch das Solenoid an der linken Ventilseite aktiviert wird und Druckflüssigkeit in eine ersten Richtung zu dem Motor fließen kann, was zu einem Einschlagen der Laufräder 38b in eine ersten Richtung führt. Beim Herunterstellen des Schalters 256 in seine Untenstellung werden die Laufräder 38b in die gegenüberliegende Richtung eingeschlagen. Die Bedienungsperson kann somit bei der Umsetzung das Gerät 12 lenken, wodurch der Umsetzvorgang in kürzester Zeit und auf kleinstem Raum durchgeführt werden kann. Außerdem werden die bei der Umsetzung auf die Anhängevorrichtung einwirkenden Belastungen verringert. Die Steuerung ist so ausgelegt, daß die Pendelräder 38b frei pendeln, wenn der Schalter 256 seine in Fig. 5 gezeigte Offenstellung einnimmt.

Im Einsatz und unter der Annahme, daß sich die beiden Geräte in ihrer in Fig. 1 gezeigten Transportstellung befinden, schwenkt die Bedienungsperson für eine Umsetzung den Handgriff 154 der Verriegelung 70 im Uhrzeigerdrehsinn aus der in Fig. 7 gezeigten Stellung, wodurch das Ende 112 des Sperrgliedes 110 von dem hochstehenden Schenkel 146b fortgeschwenkt wird. Der Lösegriff 210 der Verriegelung 74 wird dann aus der Stellung in Fig. 10 entgegen dem Uhrzeigerdrehsinn gegen den Anschlag 216 gelegt, wobei der Haken 204 von der Riegelplatte fortbewegt wird. Wenn sich bei diesen Verstellungen der Griffe 154 und 210 die Verriegelungen 70 und 74 nicht sofort lösen, werden sie sich lösen, sobald der Schlepper vorwärts fährt. Die Bedienungsperson steuert dann die Laufräder 38b nach rechts durch Betätigung des Schalters 256 und fährt mit dem Schlepper vorwärts. Die Zugdeichsel 50 schwenkt aus ihrer Position in Fig. 1 nach rechts und der Sperrstift 82b tritt aus der Fangausnehmung 194b der Verriegelung 74 aus, wenn die Schwingdeichsel 52 entgegen dem Uhrzeigerdrehsinn schwenkt. Wenn die Riegelplatte 194 sich dann dreht, stellt der Hebel 198 den Lösegriff 210 in seine Riegelstellung zurück, so daß die Verriegelung in den Gegenteil 80 einrasten kann, wenn die Schwingdeichsel 52 ihre Arbeitsstellung für das Feld erreicht. Beim Vorwärtsfahren des Schleppers werden die Laufräder 38b, wie es in Fig. 2 angedeutet ist, gesteuert, um das Gerät 12 in Richtung auf seine Arbeitsstellung zu fahren. Das Stellglied 72 verschiebt sich rückwärts, bis der Schenkel 144a sich unter das Ende 114 des Sperrgliedes 110 in die Riegelstellung nach Fig. 8 bewegt. Die Verriegelung 70 wird im Bereich des Gegenteils 80 schwenken, wenn die Schwingdeichsel 52 schwenkt und nach innen und vorne um den Zapfen 56 gesteuert wird. Der Schlepper wird dann um ein kurzes Stück zurückgesetzt, damit der Sperrstift 80a in die Fangausnehmung 194a eintreten kann. Die Riegelplatte 194 verstellt sich dann in ihre Riegelstellung nach Fig. 10. Der Schenkelteil 184 erstreckt sich von der Verriegelung 74 aus nach vorne, und die Stange 174 ist von der Außenseite des Gerätes 10 nach innen versetzt, so daß die Ecke 20c zu der linken Ecke des rechten Gerätes 12 ausgerichtet ist und unmittelbar daneben liegt.

Um wieder in die Transportstellung umsetzen zu können, verstellt die Bedienungsperson wieder den Lösegriff 210 in die Entriegelstellung und den Handgriff 154 in seine andere Endstellung und fährt vorwärts, wobei die Schwingdeichsel 52 bei frei pendelnden Laufrädern 38b nach rückwärts schwenkt. Sobald die Schwingdeichsel 52 sich ihrer Transportstellung nähert, steuert die Bedienungsperson bei weiterer Vorwärtsfahrt die Räder 38b, um die Schwingdeichsel 52 in ihre endgültige Transportstellung nach Fig. 1 zu verbringen. Der Sperrstift 82b der rückwärtigen Lasche 82 tritt in die Fangausnehmung 194b ein, und diese wird in ihre Riegelstellung verstellt, in der sie den Sperrstift 82b arretiert. Die Zugdeichsel 50 schwenkt nach links um den Zapfen 54, bis daß die Verriegelung 70 das Stellglied 72 in seiner in Fig. 7 gezeigten Stellung verriegelt. Der vordere Anschluß 60 und der rückwärtige Anschluß 62 sind dann zueinander und zu den Längsmittelachsen der beiden Geräte für einen Transport ausgerichtet.

## Patentansprüche

1. Anhängevorrichtung zum Ziehen eines ersten und eines zweiten Gerätes (10 und 12), die mit Laufrädern (32, 34, 38) versehen sind, zwischen einer Transport- und einer Arbeitsstellung umsetzbar sind, in der Transportstellung hintereinander und in der Arbeitsstellung nebeneinander laufen, gekennzeichnet durch eine Schwingdeichsel (52), deren eines Ende horizontal schwenkbar an dem ersten Gerät (10) und deren anderes Ende horizontal schwenkbar an dem zweiten Gerät (12) angeschlossen ist und die zwischen einer ersten Stellung, die der Transportstellung entspricht, und einer zweiten Stellung, die der Arbeitsstellung entspricht, beim Einschlagen mindestens eines steuerbaren Laufrades, das an dem zweiten Gerät (12) vorgesehen ist, und durch das sich fortbewegende erste und / oder das sich fortbewegende zweite Gerät (10, 12) verstellbar ist.

2. Anhängevorrichtung nach Anspruch 1, dadurch gekennzeichnet, daß das steuerbare Laufrad als Pendelrad (38a) ausgebildet ist, dessen Pendelachse über einen Motor (246) drehbar ist.

3. Anhängevorrichtung nach Anspruch 2, dadurch gekennzeichnet, daß der Motor (246) fernbedienbar ist.

4. Anhängevorrichtung nach Anspruch 2, dadurch gekennzeichnet, daß die Pendelachse des steuerbaren Laufrades über den Motor (246) wahlweise drehbar ist.

5. Anhängevorrichtung nach Anspruch 2, dadurch gekennzeichnet, daß der Motor (246) als ein in seiner Drehrichtung umkehrbarer Hydromotor ausgebildet ist, wahlweise an einer Druckquelle (250) anschließbar ist und mit der Pendelachse des steuerbaren Laufrades über ein Getriebe verbunden ist.

6. Anhängevorrichtung nach Anspruch 1, dadurch gekennzeichnet, daß die Schwingdeichsel (52) in der Transportstellung mit einer am ersten Gerät (10) vorgesehenen Lasche (82) und in der Arbeitsstellung mit einer am ersten Gerät vorgesehenen Zugdeichsel (50) verriegelbar ist.

7. Anhängevorrichtung nach einem oder mehreren der vorherigen Ansprüche, dadurch gekennzeichnet, daß die Schwingdeichsel (52) im Bereich einer Außenseite des ersten Gerätes (10) schwenkbar angeschlossen und bogenförmig oder winklig ausgebildet ist.

8. Anhängevorrichtung nach Anspruch 6, dadurch gekennzeichnet, daß die Zugdeichsel (50) am ersten Gerät (10) zwischen einer Transportstellung und einer Arbeitsstellung horizontal schwenkbar angeschlossen und in der Transport- und in der Arbeitsstellung mit einem am ersten Gerät (10) vorgesehenen Stellglied (72) verriegelbar ist.

9. Anhängevorrichtung nach Anspruch 6, dadurch gekennzeichnet, daß die Schwingdeichsel (52) mit einer Verriegelung (74) versehen ist, die manuell entriegelbar und automatisch verriegelbar ist.

10. Anhängevorrichtung nach Anspruch 8, dadurch gekennzeichnet, daß die Zugdeichsel (50) mit einer Verriegelung (70) versehen ist, die manuell entriegelbar und automatisch verriegelbar ist.

11. Anhängevorrichtung nach Anspruch 7, dadurch gekennzeichnet, daß die Schwingdeichsel (52) einen stangenförmigen Teil (174) aufweist, der über einen Ausleger (176) mit dem ersten Gerät (10) derart horizontal schwenkbar verbunden ist, daß der stangenförmige Teil (174) sich in der Transportstellung parallel oder etwa parallel zur Fahrtrichtung entlang einer Geräteseite erstreckt und aus der Transportstellung um etwa 180° nach vorne in die Arbeitsstellung verschwenkbar ist.

12. Anhängevorrichtung nach Anspruch 11, dadurch gekennzeichnet, daß sich an den stangenförmigen Teil (174) in einem Winkel von größer als 90° ein Schenkelteil (184) anschließt, der mit einer Anhängestange (40a) am zweiten Gerät (12) verbindbar ist.

13. Anhängevorrichtung nach Anspruch 12, dadurch gekennzeichnet, daß die Verriegelung (74) der Schwingdeichsel (52) im Bereich der Verbindung des stangenförmigen Teils (174) mit dem Schenkelteil (184) vorgesehen ist.

14. Anhängevorrichtung nach den Ansprüchen 7 und 8, dadurch gekennzeichnet, daß die Anlenkstellen der Zugdeichsel (50) und der Schwingdeichsel (52) zueinander Abstand aufweisen und zwischen der Längsmittellinie des ersten Gerätes (10) und einer Seitenkante des ersten Gerätes (10) liegen.

15. Anhängevorrichtung nach Anspruch 12 dadurch gekennzeichnet, daß der Schenkelteil (184) mit dem stangenförmigen Teil (174) vertikal schwenkbar verbunden ist.

16. Anhängevorrichtung nach Anspruch 9, dadurch gekennzeichnet, daß die Verriegelungen (70, 74) mit je einem Entriegelungsgriff (154, 210) versehen sind, wobei der Entriegelungsgriff (210) an der Schwingdeichsel (52) sich in deren Arbeitsstellung an der dem Entriegelungsgriff (154) an der Zugdeichsel (50) gegenüberliegenden Seite der Zugdeichsel (50) befindet.

## Claims

1. Hitch device for towing a first and a second implement (10 and 12), which are provided with wheels (32, 34, 38) and can be converted between a transport and an operating position, running one behind the other in the transport position and side by side in the operating position, characterized by a swing hitch (52), one end of which is connected in horizontally pivotable manner to the first implement (10) and the other end of which is connected in horizontally pivotable manner to the second implement (12), and which is adjustable by the moving first and/or the moving second implement (10, 12) between a first position, which corresponds to the transport position, and a second position, which corresponds to the operating position, on pivoting at least one steerable wheel provided on the second implement (12).

2. Hitch device according to claim 1, characterised in that the steerable wheel is constructed as a caster wheel (38a) the caster wheel axis of which can be rotated through a motor (246).

3. Hitch device according to claim 2, characterised in that the motor (246) can be controlled remotely.

4. Hitch device according to claim 2, characterised in that the caster wheel axis of the steerable wheel is selectively rotatable through the motor (246).

5. Hitch device according to claim 2, characterised in that the motor (246) is constructed as a hydraulic motor reversible in its direction of rotation, can be connected selectively to a pressure source (250) and is connected to the caster wheel axis of the steerable wheel through a gear unit.

6. Hitch device according to claim 1, characterised in that the swing hitch (52) can be locked in the transport position to a bracket (82) provided on the first implement (10) and in the operating position to a tow hitch (50) provided on the first implement.

7. Hitch device according to one or several of the preceding claims, characterised in that the swing hitch (52) is connected pivotably in the region of one outer side of the first implement (10) and is constructed in arched or angular manner.

8. Hitch device according to claim 6, characterised in that the tow hitch (50) is connected in horizontally pivotable manner to the first implement (10) between a transport position and an operating position and can be locked in the transport and in the operating position to an adjusting element (72) provided on the first implement (10).

9. Hitch device according to claim 6, characterised in that the swing hitch (52) is provided with a locking mechanism (74) which can be unlocked manually and can be locked automatically.

10. Hitch device according to claim 8, characterised in that the tow hitch (50) is provided with a locking mechanism (70) which can be unlocked manually and can be locked automatically.

11. Hitch device according to claim 7, characterised in that the swing hitch (52) comprises a bar-shaped portion (174) which is connected through an arm (176) to the first implement (10) in horizontally pivotable manner such that the bar-shaped portion (174) extends in the transport position parallel or approximately parallel to the direction of travel along one side of the implement and is pivotable from the transport position by approximately 180° towards the front into the operating position.

12. Hitch device according to claim 11, characterised in that connected to the bar-shaped portion (174) at an angle of greater than 90° is a limb section (184) which can be connected to a hitch bar (40a) on the second implement (12).

13. Hitch device according to claim 12, characterised in that the locking mechanism (74) of the swing hitch (52) is provided in the region of the connection of the bar-shaped portion (174) to the limb section (184).

14. Hitch device according to claims 7 and 8, characterised in that the pivotal points of the tow hitch (50) and of the swing hitch (52) are spaced with respect to one another and are located between the longitudinal central line of the first implement (10) and a lateral edge of the first implement (10).

15. Hitch device according to claim 12, characterised in that the limb section (184) is connected in vertically pivotable manner to the bar-shaped portion (174).

16. Hitch device according to claim 9, characterised in that the locking mechanisms (70, 74) are each provided with an unlocking handle (154, 210), wherein the unlocking handle (210) on the swing hitch (52) is located in the operating position of the latter on the side of the tow hitch (50) opposite to the unlocking handle (154) on the tow hitch (50).

## Revendications

1. Attelage de remorque pour tirer des premier et second appareils (10 et 12), qui sont pourvus de roues (32,34,38), peuvent être commutés d'une position de transport dans une position de travail et roulent les unes derrière les autres dans la position de transport et les unes à côté des autres dans la position de travail, caractérisé par un timon oscillant (52), dont une extrémité est raccordée de manière à pouvoir pivoter horizontalement au premier appareil (10) et dont l'autre extrémité est raccordée de manière à pouvoir pivoter horizontalement au second appareil (12) et qui peut être déplacé entre une première position, qui correspond à la position de transport, et une seconde position, qui correspond à la position de travail, lors du braquage d'au moins une roue commandable, qui est prévue sur le second appareil (12), et par le premier appareil (10) qui avance et/ou par le second appareil (12) qui avance.

2. Attelage de remorque selon la revendication 1, caractérisé en ce que la roue commandable est agencée sous la forme d'une roue oscillante (38a), dont l'axe d'oscillation peut être entraîné en rotation par l'intermédiaire d'un moteur (246).

3. Attelage de remorque selon la revendication 2, caractérisé en ce que moteur (246) peut être commandé à distance.

4. Attelage de remorque selon la revendication 2, caractérisé en ce que l'axe d'oscillation de la roue commandable peut être au choix entraîné en rotation par l'intermédiaire du moteur (246).

5. Attelage de remorque selon la revendication 2, caractérisé en ce que le moteur (246) est agencé sous la forme d'un moteur hydraulique, dont le sens de rotation peut être inversé et qui peut être raccordé au choix à une source de pression (250) et est relié, par l'intermédiaire d'une transmission, à l'axe d'oscillation de la roue commandable.

6. Attelage de remorque selon la revendication 1, caractérisé en ce que le timon oscillant (52) peut être verrouillé dans la position de transport avec une patte (82) prévue sur le premier appareil (10) et, dans la position de travail, avec un timon de traction (50) prévu sur le premier appareil.

7. Attelage de remorque selon une ou plusieurs des revendications précédentes, caractérisé en ce que le timon oscillant (52) est raccordé, de manière à pouvoir pivoter, au niveau d'un côté extérieur du premier appareil (10) et est agencé avec une forme arquée ou anguleuse.

8. Attelage de remorque selon la revendication 6, caractérisé en ce que le timon de traction (50) est raccordé au premier appareil (10) de manière à pouvoir pivoter horizontalement entre une position de transport et une position de travail, et peut être verrouillé, dans la position de transport et dans la position de travail, avec un organe de réglage (72) prévu sur le premier appareil (10).

9. Attelage de remorque selon la revendication 6, caractérisé en ce que le timon oscillant (52) comporte un système de verrouillage (74), qui est déverrouillable manuellement et verrouillable automatiquement.

10. Attelage de remorque selon la revendication 8, caractérisé en ce que le timon de traction (50) est équipé d'un système de verrouillage (70), qui est déverrouillable manuellement et verrouillable automatiquement.

11. Attelage de remorque selon la revendication 7, caractérisé en ce que le timon oscillant (52) comporte une partie en forme de barre (174), qui est reliée au premier appareil (10) par l'intermédiaire d'un bras en console (176) de manière à pouvoir pivoter horizontalement de telle sorte que, dans la position de transport, la partie en forme de barre (174) s'étend parallèlement ou approximativement parallèlement à la direction de déplacement le long d'un côté de l'appareil et peut être amenée par pivotement, sur environ 180° vers l'avant, depuis la position de transport dans la position de travail.

12. Attelage de remorque selon la revendication 11, caractérisé en ce qu'à la partie en forme de barre (174) se raccorde, sous un angle supérieur à 90°, une partie formant bras (184), qui peut être reliée à une barre d'attelage (40a) présente sur le second appareil (12).

13. Attelage de remorque selon la revendication 12, caractérisé en ce que le système de verrouillage (74) du timon oscillant (52) est prévu dans la zone de la liaison de la partie en forme de barre (174) avec la partie formant bras (184).

14. Attelage de remorque selon les revendications 7 et 8, caractérisé en ce que les points d'articulation du timon de traction (50) et du timon oscillant (52) sont séparés par une certaine distance et sont situés entre l'axe médian longitudinal du premier appareil (10) et un bord latéral du premier appareil (10).

15. Attelage de remorque selon la revendication 12, caractérisé en ce que la partie formant bras (184) est reliée à la partie en forme de barre (174), de manière à pouvoir pivoter verticalement.

16. Attelage de remorque selon la revendication 9, caractérisé en ce que les systèmes de verrouillage (70, 74) sont pourvus chacun d'une poignée de déverrouillage (154,210), la poignée de déverrouillage (210) présente sur le timon oscillant (52) étant située, dans la position de travail du timon, sur le côté du timon de traction (50) situé à l'opposé de la poignée de déverrouillage (154) présente sur le timon de traction (50).
